# EUROPÄISCHE PATENTANMELDUNG

(11) **EP 2 050 973 A2**
(43) Veröffentlichungstag der Anmeldung: **22.04.2009**
(21) Anmeldenummer: 08018156.3
(22) Anmeldetag: 16.10.2008
(51) Int. Cl.: F16B 5/06

(54) **Befestigungselement**

(30) Priorität: 19.10.2007 DE 102007050159
(71) Anmelder: Rolls-Royce Deutschland Ltd & Co KG, 15827 Blankenfelde-Mahlow (DE)
(72) Erfinder: Todorovic, Predrag, 10437 Berlin (DE)
(74) Vertreter: Weber, Joachim

(57) **Zusammenfassung**

Die Erfindung bezieht sich auf ein Befestigungselement zur Verbindung zweier Bauelemente 1, 2, wobei das Befestigungselement eine Verbindung der Bauelemente 1, 2 mit einer vorgegebenen Relativbewegungsmöglichkeit zueinander gewährleistet, wobei das Befestigungselement zwei zueinander im Wesentlichen parallele Schenkel 3, 4 umfasst, welche an ihren freien Endbereichen mittels eines einstückig mit den Schenkeln 3, 4 ausgebildeten elastischen Teils 5 verbunden sind, wobei das elastische Teil 5 in der Seitenansicht mit einem teilkreisförmigen Querschnitt versehen ist.

## Beschreibung

Die Erfindung bezieht sich auf Befestigungselement zur Verbindung zweier Bauelemente.

Im Einzelnen bezieht sich die Erfindung auf ein Befestigungselement, mittels dessen zwei Bauelemente so miteinander verbindbar sind, dass eine vorgegebene Relativbewegung zwischen den Bauelementen möglich ist. Als Beispiel hierfür ist die Verbindung zweier zueinander konzentrischer Bauelemente zu nennen, welche in radialer und in axialer Richtung zueinander eine geringfügige Relativbewegung ausführen können, beispielsweise um Wärmeausdehnungen auszugleichen.

Aus dem Stand der Technik ist es bekannt, Befestigungselemente vorzusehen, die entweder durch geeignete Werkstoffwahl (elastische Buchsen oder Ähnliches) oder durch konstruktive Maßnahmen (Langlöcher, Ausnehmungen größeren Durchmessers für Führungszapfen mit geringerem Durchmesser) die gewünschte Bewegbarkeit bei gleichzeitig definierter Lagerung schaffen.

Als nachteilig hierbei erweist es sich, dass die aus dem Stand der Technik bekannten Konstruktionen aufwendig in der Herstellung und in der Montage sind und aus vielen Einzelteilen bestehen. Durch den komplizierten Aufbau ergibt sich ein erheblicher Verschleiß, der zu Lockerungen oder Rattern führen kann und die Lebensdauer des Befestigungselementes insgesamt deutlich herabsetzt.

Der Erfindung liegt die Aufgabe zugrunde, ein Befestigungselement der eingangs genannten Art zu schaffen, welches bei einfachem Aufbau und einfacher, kostengünstiger Herstellbarkeit die Nachteile des Standes der Technik vermeidet und eine präzise Lagerung der Bauteile aneinander sicherstellt.

Erfindungsgemäß wird diese Aufgabe durch die Merkmalskombination des Anspruchs 1 gelöst, die Unteransprüche zeigen weitere vorteilhafte Ausgestaltungen der Erfindung.

Erfindungsgemäß ist somit ein Befestigungselement vorgesehen, welches einstückig ausgebildet ist und zwei zueinander parallele, bevorzugterweise plattenförmige oder streifenförmige Schenkel umfasst, welche über ein elastisches Teil, welches einstückig mit den Schenkeln verbunden ist, betriebsverbunden sind. Die beiden Schenkel dienen zur Befestigung an den beiden zu verbindenden Bauelementen, wobei jedes der Bauelemente mit einem der Schenkel zu verbinden ist. Bevorzugterweise ist dabei die Konstruktion so gewählt, dass von einem der Schenkel im Wesentlichen rechtwinklig ein erstes Befestigungsteil absteht, welches mit einem Bauteil verbindbar ist. Der andere Schenkel ist bevorzugterweise verlängert ausgebildet und weist an seiner Seite ein zweites Befestigungsteil auf, welches mit dem anderen Bauteil verbunden werden kann.

Das erfindungsgemäße Befestigungselement erlaubt somit eine präzise konzentrische und axiale Positionierung zweier Bauelemente unter gleichzeitiger Gewährleistung einer begrenzten, vorgegebenen relativen Bewegbarkeit in mehreren Bewegungsrichtungen.

Erfindungsgemäß wird somit ein einziges, einstückiges Befestigungselement geschaffen, welches kostengünstig herstellbar ist und bei seiner Montage nur einen minimalen Aufwand erfordert.

Das erfindungsgemäße Befestigungselement ist dabei so gestaltet, dass es in der Belastungsrichtung, in welcher eine Relativbewegung bevorzugt auftritt, ein minimales Trägheitsmoment aufweist. Weiterhin ist vorgesehen, dass die Steifheit des Befestigungselementes in der Belastungsrichtung, in der keine Relativbewegung oder nur eine minimale Relativbewegung erlaubt ist, am größten ist.

Somit ist erfindungsgemäß unter Verwendung des Befestigungselements eine radiale Bewegung und eine Umfangsbewegung zwischen zwei zu verbindenden Bauelementen möglich, wobei das erfindungsgemäße Befestigungselement lediglich auf Biegung beansprucht wird. In der anderen Richtung, in welcher eine Bewegung im Wesentlichen verhindert werden soll, ergibt sich ein Höchstmaß an Steifigkeit.

Im Folgenden wird die Erfindung anhand eines Ausführungsbeispiels in Verbindung mit der Zeichnung beschrieben. Dabei zeigt:

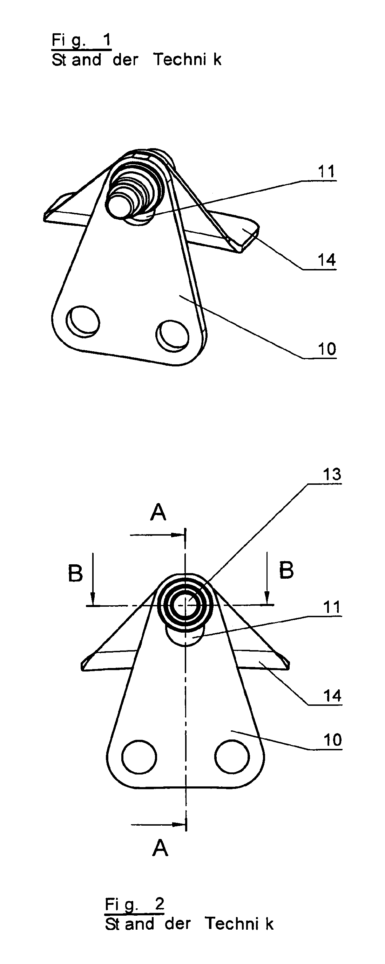

- Fig. 1: eine perspektivische Ansicht eines Befestigungselements gemäß dem Stand der Technik,
- Fig. 2: eine Seitenansicht des in Fig. 1 gezeigten Befestigungselements,
- Fig. 3: eine Schnittansicht längs der Linie A-A von Fig. 2,
- Fig. 4: eine Schnittansicht längs der Linie B-B von Fig. 2,
- Fig. 5: eine perspektivische Ansicht analog Fig. 1,
- Fig. 6: eine vereinfachte Darstellung der Anwendung des aus dem Stand der Technik bekannten Befestigungselements zur Verbindung zweier Bauelemente,

- Fig. 7: eine perspektivische Ansicht eines erfindungsgemäßen Befestigungselements,
- Fig. 8: eine weitere perspektivische Ansicht des in Fig. 7 gezeigten Befestigungselements,
- Fig. 9: eine Seitenansicht des Befestigungselements der Fig. 7 und 8,
- Fig. 10: eine Schnittansicht längs der Linie A-A von Fig. 9,
- Fig. 11: eine Draufsicht auf das Befestigungselement der Fig. 7 bis 9,
- Fig. 12: eine Schnittansicht längs der Linie B-B von Fig. 11, und
- Fig. 13: eine Ansicht, analog Fig. 6 der beispielhaften Verwendung des erfindungsgemäßen Befestigungselements.

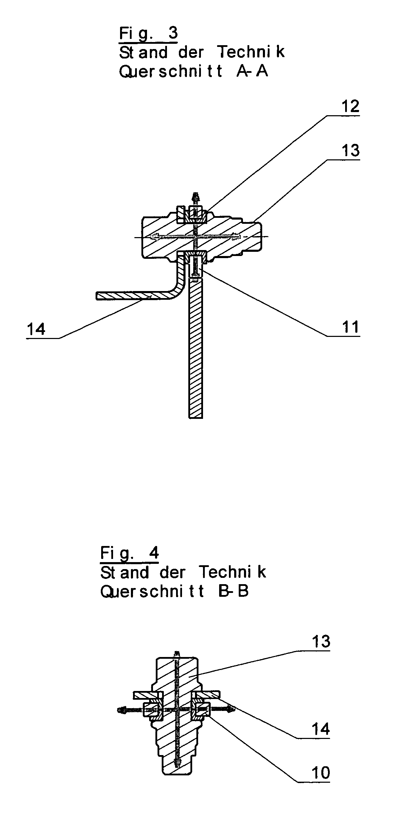

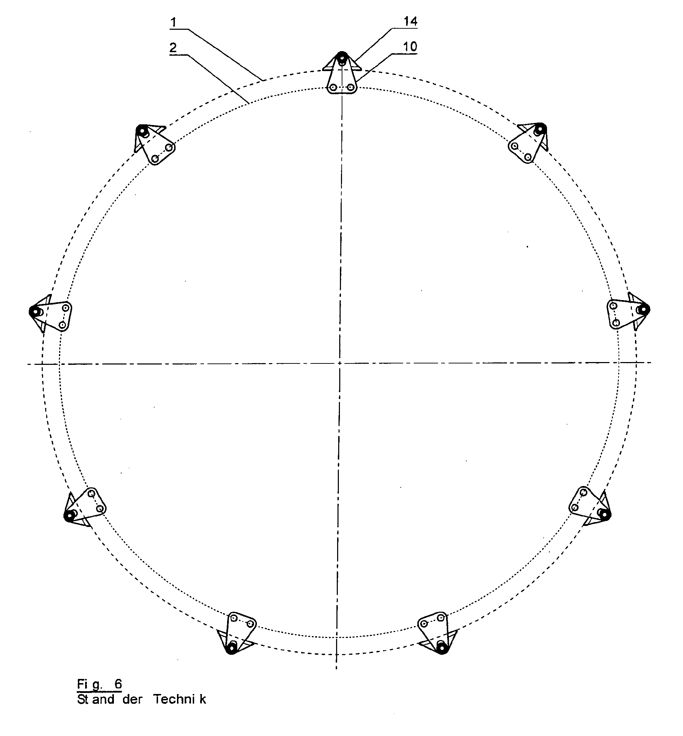

Der Stand der Technik zeigt typische Befestigungselemente zur Verbindung zweier zueinander konzentrischer Bauelemente 1, 2 (sh. Fig. 6). Hierzu ist eine Lagerplatte 10 vorgesehen, die mit einer Ausnehmung 11 versehen ist, in welcher ein Führungsring 12 mit einem U-förmigen Querschnitt angeordnet ist. Den Führungsring 12 durchgreift ein Lagerzapfen 13, welcher eine zweite Lagerplatte 14 lagert. Aus den Darstellungen der Fig. 3 und 4 ergibt sich, dass eine dreidimensionale Bewegbarkeit zwischen der ersten Lagerplatte 10 und der zweiten Lagerplatte 14 möglich ist. Weiterhin ergibt sich aus den Darstellungen, dass insgesamt ein komplizierter und aufwendiger Gesamtaufbau vorliegt.

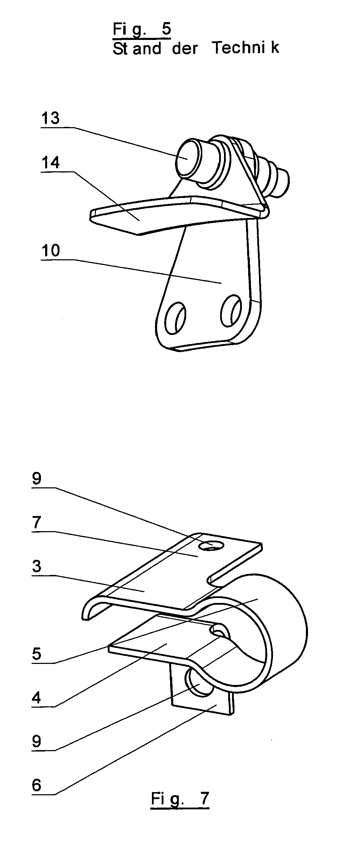

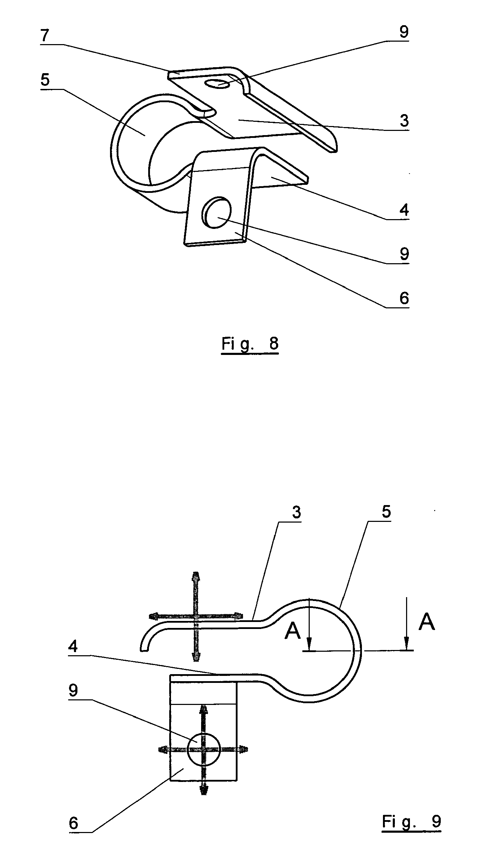

Die Fig. 7 und 8 zeigen ein Ausführungsbeispiel des erfindungsgemäßen Befestigungselements. Dieses umfasst einen ersten Schenkel 3 sowie einen zu diesem parallelen und beabstandeten zweiten Schenkel 4, welche jeweils (sh. insbesondere Fig. 9) an ihrem freien Ende mit einem elastischen Teil 5 verbunden sind. Das elastische Teil 5, welches einstückig mit den beiden Schenkeln 3, 4 verbunden ist, weist einen kreisförmigen Querschnitt auf und ist somit teil-zylindrisch (sh. Fig. 7 und 8).

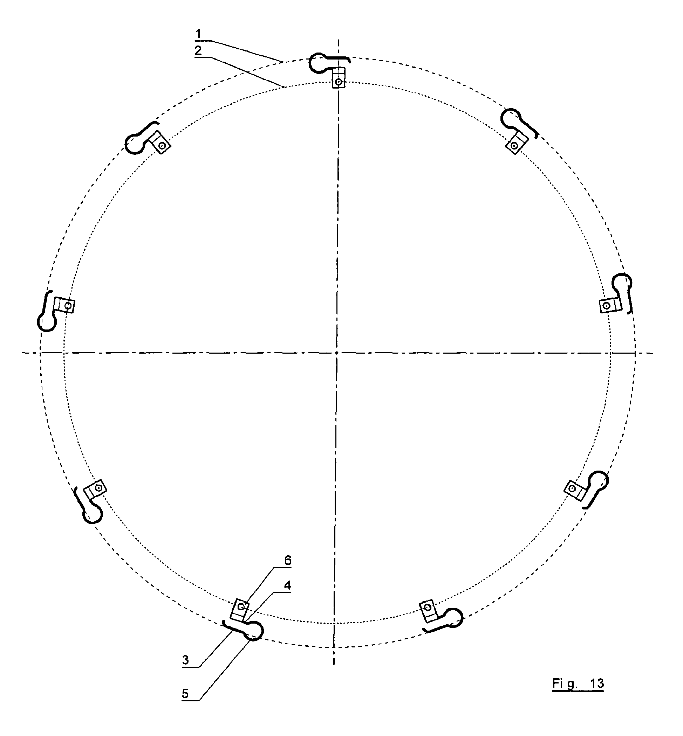

Von dem zweiten Schenkel 4 aus erstreckt sich im Wesentlichen senkrecht ein erstes Befestigungsteil 6, welches mit einer Ausnehmung versehen ist und an einem Bauteil, beispielsweise dem Bauteil 2 (sh. Fig. 13) mittels einer Schraubverbindung fixierbar ist.

Der erste Schenkel 3 ist seitlich verlängert und umfasst ein zweites Befestigungsteil 7, welches ebenfalls mit einer Befestigungs-Ausnehmung versehen ist, um an dem Bauteil 1 (Fig. 13) verschraubt zu werden.

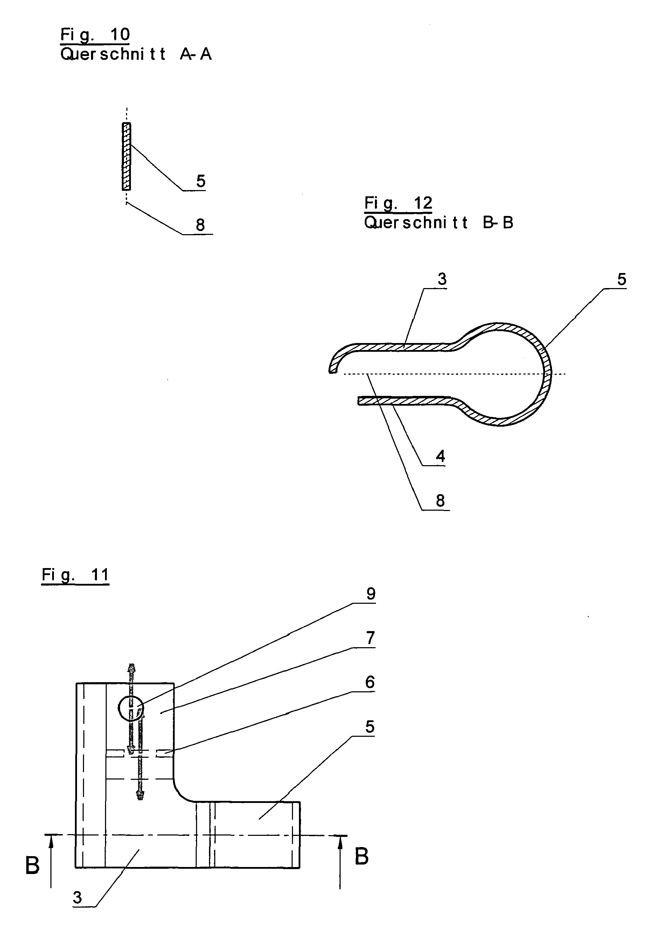

Die Fig. 9 und 11 zeigen jeweils die Bewegungsrichtungen in drei Dimensionen. Bei der Bewegungsrichtung gemäß Fig. 11 erfolgt eine Torsion oder Scherung des elastischen Teils 5. Dieses ist gegen diese Art der Verformung relativ stabil, so dass insgesamt nur eine geringe Bewegung möglich ist.

Demgegenüber ist bei einer Relativbewegung längs der senkrechten Pfeile gemäß Fig. 9 eine "weichere" Lagerung möglich, da lediglich ein sehr geringer Querschnitt (sh. Fig. 10) auf Biegung beansprucht wird. Die gestrichelte Linie stellt eine elastische neutrale Linie dar (Fig. 10).

Die Fig. 12 zeigt eine Seitenansicht, aus welcher sich der teilkreisförmige Querschnitt des elastischen Teils 5 ergibt, der zusammen mit dem in Fig. 10 gezeigten Querschnitt zu den erwähnten elastischen Eigenschaften führt.

Auch bei einer Verformung gemäß den horizontalen Pfeilen der Fig. 9 erfolgt eine Biegebeanspruchung des elastischen Teils 5, welche eine "weichere" Lagerung ermöglicht.

Somit sind radiale Bewegungen und Umfangsbewegungen der Bauelemente 1 und 2 leicht möglich, da das erfindungsgemäße Befestigungselement über den Querschnitt A-A (Fig. 10) nur mit Biegebelastungen beaufschlagt wird, welche ein minimales Trägheitsmoment des Querschnitts mit sich bringen. Hierdurch sind größere Relativbewegungen möglich. Die axiale Lagerung bedingt eine Scher-Verformung oder Torsion des zylindrischen elastischen Teils 5, wodurch sich eine "härtere" Lagerung als hinsichtlich des Querschnitts A-A (Fig. 10) ergibt.

Das erfindungsgemäße Befestigungselement zeichnet sich somit durch einen einfachen Aufbau und eine einfache Konstruktionsweise aus, welche durch geeignete Dimensionierung und Materialauswahl exakt vorbestimmbar ist. Der Verschleiß ist, im Vergleich zum Stand der Technik minimal, so dass sich eine weitaus höhere Lebensdauer ergibt. Durch den geringeren Montageaufwand und durch die geringe Anzahl der Teile ergibt sich eine erhebliche Kosteneinsparung. Zusätzlich ergibt sich ein Vorteil hinsichtlich der Gewichtsreduzierung.

### Bezugszeichenliste

- 1: Bauelement
- 2: Bauelement
- 3: Erster Schenkel
- 4: Zweiter Schenkel
- 5: Elastisches Teil
- 6: Erstes Befestigungsteil
- 7: Zweites Befestigungsteil
- 8: Elastische neutrale Linie
- 9: Befestigungsausnehmung
- 10: Erste Lagerplatte
- 11: Ausnehmung
- 12: Führungsring
- 13: Lagerzapfen
- 14: Zweite Lagerplatte

## Patentansprüche

1. Befestigungselement zur Verbindung zweier Bauelemente (1, 2), wobei das Befestigungselement eine Verbindung der Bauelemente (1, 2) mit einer vorgegebenen Relativbewegungsmöglichkeit zueinander gewährleistet, wobei das Befestigungselement zwei zueinander im Wesentlichen parallele Schenkel (3, 4) umfasst, welche an ihren freien Endbereichen mittels eines einstückig mit den Schenkeln (3, 4) ausgebildeten elastischen Teils (5) verbunden sind, wobei das elastische Teil (5) in der Seitenansicht mit einem teilkreisförmigen Querschnitt versehen ist.

2. Befestigungselement nach Anspruch 1, **dadurch gekennzeichnet, dass** einer der Schenkel (4) einstückig mit einem im Wesentlichen rechtwinklig von diesem abstehenden ersten Befestigungsteil (6) versehen ist.

3. Befestigungselement nach Anspruch 1 oder 2, **dadurch gekennzeichnet, dass** die Schenkel (3, 4) in Form ebener Platten ausgebildet sind.

4. Befestigungselement nach einem der Ansprüche 2 oder 3, **dadurch gekennzeichnet, dass** das erste Befestigungsteil (6) plattenförmig ausgebildet ist.

5. Befestigungselement nach einem der Ansprüche 2 bis 4, **dadurch gekennzeichnet, dass** der dem ersten Befestigungsteil (6) abgewandte Schenkel (3) seitlich verlängert ausgebildet und mit einem zweiten Befestigungsteil (7) versehen ist.

6. Befestigungselement nach einem der Ansprüche 4 bis 5, **dadurch gekennzeichnet, dass** der elastische Teil (6) einen größeren Durchmesser aufweist, als der Abstand der Schenkel (3, 4).

7. Befestigungselement nach einem der Ansprüche 2 bis 6, **dadurch gekennzeichnet, dass** das erste Befestigungsteil (6) mit einer Befestigungsausnehmung (9) versehen ist.

8. Befestigungselement nach einem der Ansprüche 2 bis 7, **dadurch gekennzeichnet, dass** das zweite Befestigungsteil (7) mit einer Befestigungsausnehmung (9) versehen ist.

9. Befestigungselement nach einem der Ansprüche 1 bis 8, **dadurch gekennzeichnet, dass** dieses als einstückiges Blechbiegeteil ausgebildet ist.
